# EUROPEAN PATENT APPLICATION

(11) **EP 4 807 731 A1**
(43) Date of publication of application: **16.09.2026**
(21) Application number: 24888338.1
(22) Date of filing: 23.08.2024
(51) Int. Cl.: G10K 15/04, B60L 3/00, H04R 1/02

(54) **SOUND MANAGEMENT SYSTEM, ELECTRIC VEHICLE, AND SOUND MANAGEMENT PROGRAM**

(30) Priority: 08.11.2023 JP 2023190842
(71) Applicant: TOYOTA JIDOSHA KABUSHIKI KAISHA, Toyota-Shi, Aichi-Ken 471-8571 (JP)
(72) Inventor: UCHIDA, Takahiro, Toyota-shi, Aichi 471-8571 (JP); ARAKAWA, Seiji, Toyota-shi, Aichi 471-8571 (JP); SAKAI, Kazuhito, Toyota-shi, Aichi 471-8571 (JP); FUKUHARA, Chie, Toyota-shi, Aichi 471-8571 (JP)
(74) Representative: Cabinet Beau de Loménie
(86) International application number: PCT/JP2024/030040
(87) International publication number: WO 2025/100036

(57) **Abstract**

A sound management system is applied to an electric vehicle that uses an electric motor as a power unit for running. The sound management system generates a pseudo engine sound and outputs the pseudo engine sound through a speaker mounted on the electric vehicle. The sound management system acquires driving history information indicating a driving history of the electric vehicle and changes the pseudo engine sound in accordance with the driving history.

## Description

### [TECHNICAL FIELD]

The present disclosure relates to a sound management technique applied to an electric vehicle that uses an electric motor as a power unit for running.

### [BACKGROUND ART]

Patent Literature 1 discloses a sound control device mounted on a vehicle that can run by an electric motor. The sound control device realistically reproduces an engine sound that is generated when a gear is changed in an engine vehicle.

### [LIST OF RELATED ART]

### [Patent Literature]

Patent Literature 1: Japanese Patent Application Publication 2011-215437

### [SUMMARY]

### [Problem to be Solved by Invention]

An engine sound of a real engine vehicle changes over time. The cause of the change over time in the engine sound is not just deterioration of parts over time. As an engine vehicle is used by a driver more and more, the driver's driving style and driving environment may be gradually reflected in the engine sound. In other words, as an engine vehicle is used by a driver more and more, the engine sound "ages." Since the driving style and the driving environment are different for each driver, a state of aging of the engine sound is also different for each driver. The state of aging of the engine sound is unique to the driver and reflects the driver's personality. Some drivers find joy and pride in such the aging of the engine sound.

In the above-mentioned Patent Literature 1, the change over time (aging) in the engine sound is not considered at all. Therefore, it is not possible to increase satisfaction of a driver who seeks more realism.

### [Solution to Problem]

A first aspect relates to a sound management system applied to an electric vehicle that uses an electric motor as a power unit for running.

The sound management system has one or more processors. The one or more processors generate a pseudo engine sound and output the pseudo engine sound through a speaker mounted on the electric vehicle. The one or more processors acquire driving history information indicating a driving history of the electric vehicle and change the pseudo engine sound in accordance with the driving history.

A second aspect relates to an electric vehicle that uses an electric motor as a power unit for running.

The electric vehicle has one or more processors. The one or more processors generate a pseudo engine sound and output the pseudo engine sound through a speaker mounted on the electric vehicle. The one or more processors acquire driving history information indicating a driving history of the electric vehicle and change the pseudo engine sound in accordance with the driving history.

A third aspect relates to a sound management program applied to an electric vehicle that uses an electric motor as a power unit for driving.

The sound management program is configured to perform an engine sound output process when executed by a computer.

The engine sound output process includes generating a pseudo engine sound and outputting the pseudo engine sound through a speaker mounted on the electric vehicle. The engine sound output process further acquires driving history information indicating a driving history of the electric vehicle and changes the pseudo engine sound in accordance with the driving history.

### [Effects of the Invention]

According to the present disclosure, the pseudo engine sound is output through the speaker mounted on the electric vehicle. The pseudo engine sound changes in accordance with the driving history of the electric vehicle. It is therefore possible to increase satisfaction of a driver who seeks more realism.

### [BRIEF DESCRIPTION OF DRAWINGS]

FIG. 1 is a conceptual diagram showing an electric vehicle and a sound management system.
FIG. 2 is a block diagram showing an example of a basic functional configuration of a sound management system.
FIG. 3 is a block diagram showing another example of a basic functional configuration of a sound management system.
FIG. 4 is a diagram for explaining various examples of a change over time in an engine sound of a general engine vehicle.
FIG. 5 is a block diagram showing an example of a functional configuration of a sound management system.
FIG. 6 is a block diagram showing an example of a configuration of a sound source adjustment model.
FIG. 7 is a block diagram showing another example of a functional configuration of a sound management system.
FIG. 8 is a block diagram showing yet another example of a functional configuration of a sound management system.
FIG. 9 is a block diagram showing yet another example of a functional configuration of a sound management system.
FIG. 10 is a block diagram showing an in-vehicle device and a management server.
FIG. 11 is a block diagram for explaining a first example of an operation embodiment of a sound management system.
FIG. 12 is a block diagram showing a second example of an operation embodiment of a sound management system.
FIG. 13 is a block diagram showing a third example of an operation embodiment of a sound management system.
FIG. 14 is a block diagram showing a fourth example of an operation embodiment of a sound management system.
FIG. 15 is a block diagram showing a first configuration example of a power control system of an electric vehicle.
FIG. 16 is a diagram showing examples of an engine model, a clutch model, and a transmission model that constitute an MT vehicle model.
FIG. 17 is a diagram showing torque characteristics of an electric motor achieved by motor control using an MT vehicle model.
FIG. 18 is a block diagram showing a second configuration example of a power control system of an electric vehicle.

### [DESCRIPTION OF EMBODIMENTS]

Embodiments of the present disclosure will be described with reference to the accompanying drawings.

### 1. OUTPUT OF PSEUDO ENGINE SOUND

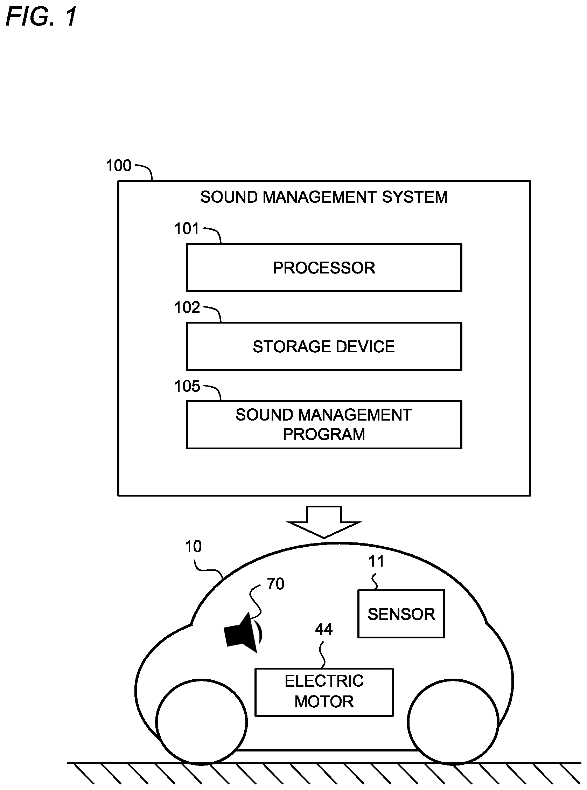

FIG. 1 is a conceptual diagram showing an electric vehicle 10 and a sound management system 100 according to the present embodiment. The electric vehicle 10 is equipped with an electric motor 44. The electric motor 44 is exemplified by a brushless DC motor or a three-phase AC synchronous motor. The electric vehicle 10 uses the electric motor 44 as a power unit for running.

Moreover, the electric vehicle 10 includes a variety of sensors 11. The variety of sensors 11 detect a driving state of the electric vehicle 10. Examples of the variety of sensors 11 include an accelerator position sensor, a brake position sensor, a wheel speed sensor, an acceleration sensor, a rotational speed sensor, a position sensor, a temperature sensor, a humidity sensor, and the like. The accelerator position sensor detects an amount of operation of an accelerator pedal. The brake position sensor detects an amount of operation of a brake pedal. The wheel speed sensor detects a rotation speed of a wheel of the electric vehicle 10. The acceleration sensor detects a lateral acceleration and a longitudinal acceleration of the electric vehicle 10. The rotational speed sensor detects a rotational speed of the electric motor 44. The position sensor detects a position of the electric vehicle 10. An example of the position sensor is a GNSS (Global Navigation Satellite System) sensor. The temperature sensor detects temperatures inside and outside the electric vehicle 10. The humidity sensor detects humidities inside and outside the electric vehicle 10.

Furthermore, the electric vehicle 10 is equipped with one or more speakers 70. For example, the speaker 70 is an interior speaker that outputs sound to the interior of the electric vehicle 10. As another example, the speaker 70 may be an exterior speaker that outputs sound to the outside the electric vehicle 10. The electric vehicle 10 may be equipped with both the interior speaker and the exterior speaker.

The sound management system 100 is applied to such the electric vehicle 10 and manages sounds related to the electric vehicle 10. In particular, the sound management system 100 generates and manages the sound output from the speaker 70 mounted on the electric vehicle 10. Furthermore, the sound management system 100 outputs the generated sound through the speaker 70 mounted on the electric vehicle 10. For example, the sound management system 100 generates a pseudo engine sound and outputs the pseudo engine sound through the speaker 70 mounted on the electric vehicle 10.

The entire sound management system 100 may be installed on the electric vehicle 10. As another example, at least a part of the sound management system 100 may be included in a management server outside the electric vehicle 10. In that case, the sound management system 100 may remotely manage the sounds related to the electric vehicle 10. As yet another example, the sound management system 100 may be distributed to the electric vehicle 10 and the management server.

When generalized, the sound management system 100 includes one or more processors 101 (hereinafter simply referred to as a processor 101) and one or more storage devices 102 (hereinafter simply referred to as a storage device 102). The processor 101 executes a variety of processing. Examples of the processor 101 include a general-purpose processor, a special-purpose processor, a central processing unit (CPU), a graphics processing unit (GPU), an application-specific integrated circuit (ASIC), a field-programmable gate array (FPGA), an integrated circuit, a conventional circuit, and/or a combination thereof. The processor 101 may also be referred to as circuitry or processing circuitry. The circuitry is a hardware that is programmed to implement the described functions, or a hardware that performs the functions. The storage device 102 stores a variety of information. Examples of the storage device 102 include a volatile memory, a non-volatile memory, a hard disk drive (HDD), a solid state drive (SSD), and the like. The functions of the sound management system 100 is realized by a cooperation of the processor 101 and the storage device 102.

One or more sound management programs 105 (hereinafter simply referred to as a sound management program 105 ) are computer programs executed by the processor 101. The functions of the sound management system 100 may be realized by a cooperation of the processor 101 executing the sound management program 105 and the storage device 102. The sound management program 105 is stored in the storage device 102. Alternatively, the sound management program 105 may be recorded on a non-transitory computer-readable recording medium.

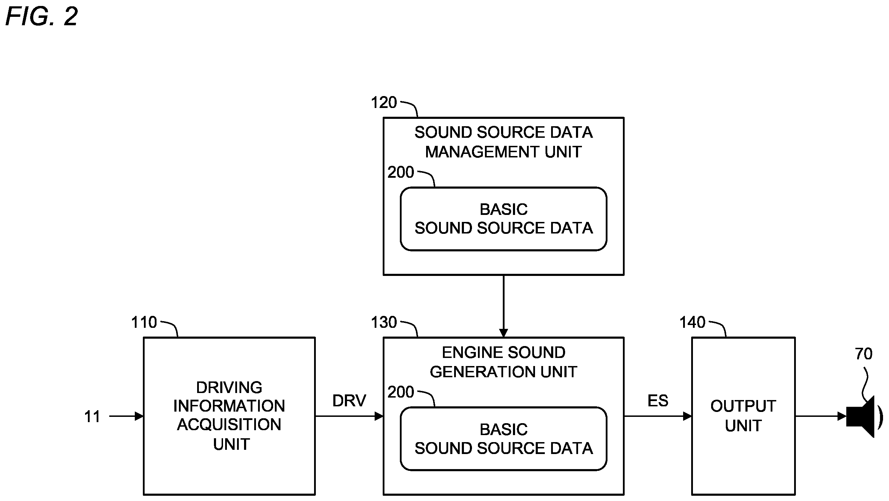

FIG. 2 is a block diagram showing an example of a basic functional configuration of the sound management system 100. The sound management system 100 includes, as functional blocks, a driving information acquisition unit 110, a sound source data management unit 120, an engine sound generation unit 130, and an output unit 140. These functional blocks may be realized by a cooperation of the processor 101 executing the sound management program 105 and the storage device 102.

The driving information acquisition unit 110 acquires driving information DRV related to the electric vehicle 10. The driving information DRV includes information on a driving operation performed by a driver, information on a travel state of the electric vehicle 10, information on a driving environment under which the electric vehicle 10 is placed, and the like. Typically, the driving information DRV includes sensor detection information detected by the sensors 11 mounted on the electric vehicle 10. For example, the sensor detection information includes the operation amount of the accelerator pedal (i.e., accelerator opening), the operation amount of the brake pedal (i.e., brake opening), the wheel speed, the vehicle speed, the longitudinal acceleration, the lateral acceleration, the rotation speed of the electric motor 44, and the like. The sensor detection information may include the position of the electric vehicle 10. The sensor detection information may include the temperature and the humidity.

In addition, the driving information DRV includes a virtual engine rotation speed Ne. Here, it is assumed that the electric vehicle 10 uses a virtual engine as a power unit for running. The virtual engine rotation speed Ne is a rotation speed of the virtual engine when it is assumed that the electric vehicle 10 is driven by the virtual engine. For example, the driving information acquisition unit 110 may calculate the virtual engine rotation speed Ne so as to increase as the wheel speed increases. When the electric vehicle 10 has a manual mode (MT mode) to be described later, the driving information acquisition unit 110 may calculate the virtual engine rotation speed Ne in the manual mode based on the wheel speed, an overall reduction ratio, and a slip rate of a virtual clutch. A method for calculating the virtual engine rotation speed Ne in the manual mode will be described later in detail.

The sound source data management unit 120 stores and manages basic sound source data 200 used to generate a pseudo engine sound. The sound source data management unit 120 is mainly realized by the one or more storage devices 102. Typically, the basic sound source data 200 includes a plurality of types of sound source data. The plurality of types of sound source data include, for example, sound source data of sounds caused by engine combustion (for low rotation speed, medium rotation speed, and high rotation speed), sound source data of sounds caused by a drive-train such as gears (for low rotation speed, medium rotation speed, and high rotation speed), sound source data of noise sounds, sound source data of event sounds (e.g., scraping sounds, engine stalling sound), and the like. Each sound source data is generated in advance through a simulation and the like based on an engine model and a vehicle model of the engine vehicle. It is possible to flexibly adjust each sound source data. That is, it is possible to flexibly adjust at least one of a sound pressure and a frequency of the sound indicated by the sound source data.

The engine sound generation unit 130 (engine sound simulator) is a simulator that generates a pseudo engine sound. The engine sound generation unit 130 acquires at least a part of the driving information DRV from the driving information acquiring unit 110. In particular, the engine sound generation unit 130 acquires information on the virtual engine rotation speed Ne and the vehicle speed from the driving information acquiring unit 110. Furthermore, the engine sound generation unit 130 reads the basic sound source data 200 from the sound source data management unit 120. The engine sound generation unit 130 then generates the pseudo engine sound according to the driving state (specifically, the virtual engine rotation speed Ne and the vehicle speed) of the electric vehicle 10 by combining one or more sound source data included in the basic sound source data 200. An engine sound data ES is data indicating the generated pseudo engine sound.

It should be noted that the generation of the pseudo engine sound is a well-known technique, and is not particularly limited in the present embodiment. For example, the pseudo engine sound may be generated by a well-known engine sound simulator used in games and the like. The method may be such that a map of the virtual engine rotation speed Ne vs. frequency and a map of a virtual engine torque vs. sound pressure are prepared in advance, the frequency of the pseudo engine sound is increased or decreased in proportion to the virtual engine rotation speed Ne, and the sound pressure is increased or decreased in proportion to the virtual engine torque.

The output unit 140 receives the engine sound data ES generated by the engine sound generation unit 130. Then, the output unit 140 outputs the pseudo engine sound through the speaker 70 based on the engine sound data ES.

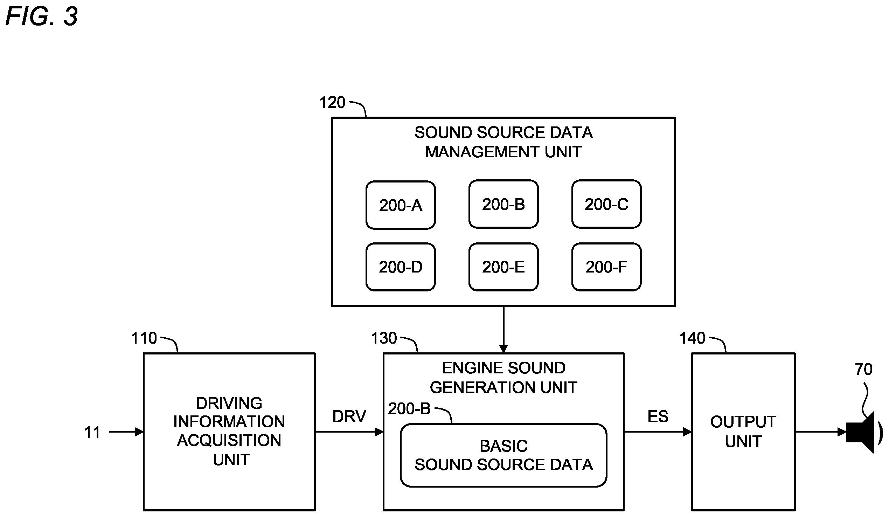

FIG. 3 is a block diagram showing another example of a basic functional configuration of the sound management system 100. In the example shown in FIG. 3, the sound source data management unit 120 stores and manages a plurality of types of basic sound source data 200 (200-A, 200-B, 200-C ...) associated with a plurality of vehicle types (A, B, C ...). That is, the sound source data management unit 120 stores and manages the basic sound source data 200 for each vehicle type. Each basic sound source data 200 is generated in advance based on an engine model and a vehicle model of the corresponding vehicle type. The driver may specify his or her preferred vehicle type from among the plurality of vehicle types. In this case, the engine sound generation unit 130 acquires one of the plurality of types of basic sound source data 200 that is associated with the vehicle type specified by the driver. The engine sound generation unit 130 then generates the pseudo engine sound by using the acquired basic sound source data 200 (for example, the basic sound source data 200-B associated with the vehicle type B). This allows the driver to feel as if he or she is driving the preferred vehicle type.

### 2. REPRODUCING CHANGE OVER TIME (AGING) IN ENGINE SOUND

A vehicle that is equipped with an engine (internal combustion engine) and uses the engine as a power unit for running is hereinafter referred to as an "engine vehicle." An engine sound of a real engine vehicle changes over time. The cause of the change over time in the engine sound is not just deterioration of parts over time. As an engine vehicle is used by a driver more and more, the driver's driving style and driving environment may be gradually reflected in the engine sound. In other words, as an engine vehicle is used by a driver more and more, the engine sound "ages." Since the driving style and the driving environment are different for each driver, a state of aging of the engine sound is also different for each driver. The state of aging of the engine sound is unique to the driver and reflects the driver's personality. Some drivers find joy and pride in such the aging of the engine sound.

In view of the above, the present disclosure proposes a technique capable of reproducing the change over time (aging) in the engine sound of the engine vehicle as well.

### 2-1. Examples of Changes Over Time in Engine Sound

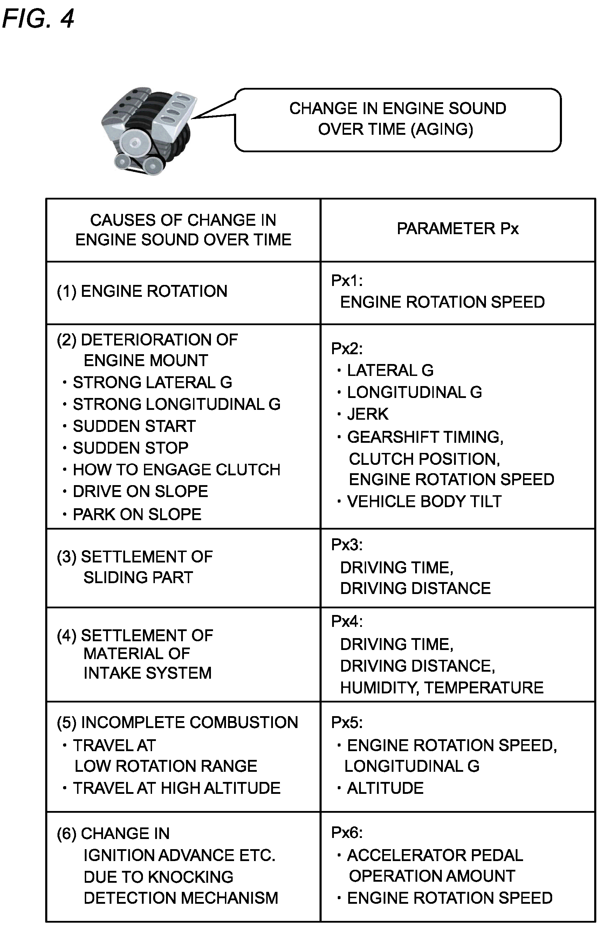

FIG. 4 is a diagram for explaining various examples of the change over time in the engine sound of a typical engine vehicle. A parameter Px is a parameter that contributes to the change over time in the engine sound of an engine vehicle. In the electric vehicle 10, a state of a change over time in an engine sound of a virtual engine can be estimated from a history of the parameter Px (or a parameter equivalent thereto).

### 2-1-1. First example

The driving style varies from driver to driver. Some drivers tend to use the engine in a relatively high rotation speed range, while other drivers tend to use the engine in a relatively low rotation speed range. It is known that a difference in the used engine rotation speed gradually results in a difference in the state of the change over time in the engine sound of the engine vehicle. In other words, a difference in the driver's driving style is reflected in a difference in the state of the change over time (aging) in the engine sound of the engine vehicle.

In the first example, a first parameter Px1 that contributes to the change over time in the engine sound is the engine rotation speed. A difference in a history of the first parameter Px1 (i.e., the engine rotation speed) gradually results in a difference in the state of the change over time in the engine sound of the engine vehicle. In the electric vehicle 10, the virtual engine rotation speed Ne corresponding to the engine rotation speed is used as the first parameter Px1. Then, the state of the change over time in the engine sound of the virtual engine can be estimated from the history of the virtual engine rotation speed Ne.

### 2-1-2. Second example

An engine mount is likely to wear (deteriorate) depending on how the engine vehicle is driven and a tilt of a vehicle body. It is known that the wear of the engine mount causes increase in low muffled sound and abnormal noise. That is, a difference in the driver's driving style and the driving environment is reflected in a difference in the state of the change over time (aging) in the engine sound of the engine vehicle.

For example, if such a steering operation that applies a strong lateral G to the vehicle body is frequently performed, the engine mount is likely to deteriorate. As another example, if such an acceleration operation or a braking operation that applies a strong longitudinal G to the vehicle body is frequently performed, the engine mount is likely to deteriorate. As still another example, sudden start is frequently performed, the engine mount is likely to deteriorate. As yet another example, sudden stop is frequently performed, the engine mount is likely to deteriorate. In these cases, a second parameter Px2 that contributes to the change over time in the engine sound is the lateral acceleration, the longitudinal acceleration, a jerk, and the like.

As another example, if the driver does not engage a clutch properly, the engine mount is likely to deteriorate. In other words, if a combination of a gearshift timing, a clutch position, and an engine rotation speed is away from an appropriate one, the engine mount is likely to deteriorate. In this case, the second parameter Px2 that contributes to the change over time in the engine sound is the combination of the gearshift timing, the clutch position, and the engine rotation speed.

As yet another example, if the engine vehicle frequently runs on steep slopes, the engine mount is likely to deteriorate. In addition, if the engine vehicle is parked on a sloped road for a long period of time, the engine mount is likely to deteriorate. In these cases, the second parameter Px2 that contributes to the change over time in the engine sound is a vehicle body tilt. The vehicle body tilt can be estimated by using an acceleration sensor mounted on the vehicle.

A difference in a history of such the second parameter Px2 gradually results in a difference in the state of the change over time in the engine sound of the engine vehicle. In the electric vehicle 10, the state of the change over time in the engine sound of the virtual engine can be estimated from the history of the second parameter Px2 (or a parameter equivalent thereto).

### 2-1-3. Third example

As the engine vehicle runs, a sliding part of the engine becomes more settled as compared to its initial state immediately after manufacture, and the engine becomes its intrinsic condition. As the sliding part becomes more settled, the engine sound also changes. In the third example, a third parameter Px3 that contributes to the change over time in the engine sound is a driving time or a driving distance. A history of the driving time is a total driving time, and a history of the driving distance is a total driving distance. A difference in a history of the third parameter Px3 gradually results in a difference in the state of the change over time in the engine sound of the engine vehicle. In the electric vehicle 10, the state of the change over time in the engine sound of the virtual engine can be estimated from the history of the third parameter Px3.

### 2-1-4. Fourth example

As the engine vehicle runs, a material of an intake system becomes more settled as compared to its initial state immediately after manufacture, and the engine sound changes. For example, it is known that reduction in moisture content of a resin material results in a better engine sound. In the fourth example, a fourth parameter Px4 that contributes to the change over time in the engine sound is a driving time or a driving distance, humidity, temperature, and the like. A difference in a history of the fourth parameter Px4 gradually results in a difference in the state of the change over time in the engine sound of the engine vehicle. In the electric vehicle 10, the state of the change over time in the engine sound of the virtual engine can be estimated from the history of the fourth parameter Px4.

### 2-1-5. Fifth example

As incomplete combustion of the engine increases, carbon is more accumulated inside the engine. The carbon is accumulated, for example, in a piston head, a valve, an exhaust port, and the like. The accumulation of the carbon in the engine causes change in a compression ratio and thus causes change in the engine sound. In other words, a difference in the driver's driving style and the driving environment is reflected in a difference in the state of the change over time in the engine sound of the engine vehicle.

For example, if a driver drives the engine vehicle at low rotation speed range for a short period of time repeatedly, the incomplete combustion is likely to increase. In this case, a fifth parameter Px5 that contributes to the change over time in the engine sound is an engine rotation speed, a longitudinal acceleration, and the like.

As another example, an air pressure is lower at high altitudes, and thus the incomplete combustion is likely to occur when the engine travels at high altitudes. In this case, the fifth parameter Px5 that contributes to the change over time in the engine sound is an altitude of a vehicle position. The altitude is obtained based on, for example, the vehicle position and three-dimensional map information. The vehicle position is acquired by the GNSS sensor mounted on the vehicle.

A difference in a history of such the fifth parameters Px5 gradually results in a difference in the state of the change over time in the engine sound of the engine vehicle. In the electric vehicle 10, the state of the change over time in the engine sound of the virtual engine can be estimated from the history of the fifth parameters Px5 (or a parameter equivalent thereto). It should be noted that in the electric vehicle 10, the virtual engine rotation speed Ne is used instead of the engine rotation speed.

### 2-1-6. Sixth example

When an engine ECU of the engine vehicle is equipped with a knocking detection mechanism, the engine ECU learns how the driver uses the accelerator pedal, and as a result, an ignition advance angle and the like change. For example, a combustion timing may be advanced or retarded. Alternatively, an amount of fuel is finely adjusted. As a result, the engine sound of engine vehicle changes. In other words, the driver's habits are reflected in the engine sound of the engine vehicle.

In the sixth example, a sixth parameter Px6 that contributes to the change over time in the engine sound is an operation amount of the accelerator pedal, an engine rotation speed, and the like. A difference in a history of the sixth parameters Px6 gradually results in a difference in the state of the change over time in the engine sound of the engine vehicle. In the electric vehicle 10, the state of the change over time in the engine sound of the virtual engine can be estimated from the history of the sixth parameters Px6. It should be noted that in the electric vehicle 10, the virtual engine rotation speed Ne is used instead of the engine rotation speed.

### 2-2. Examples of Functional Configuration

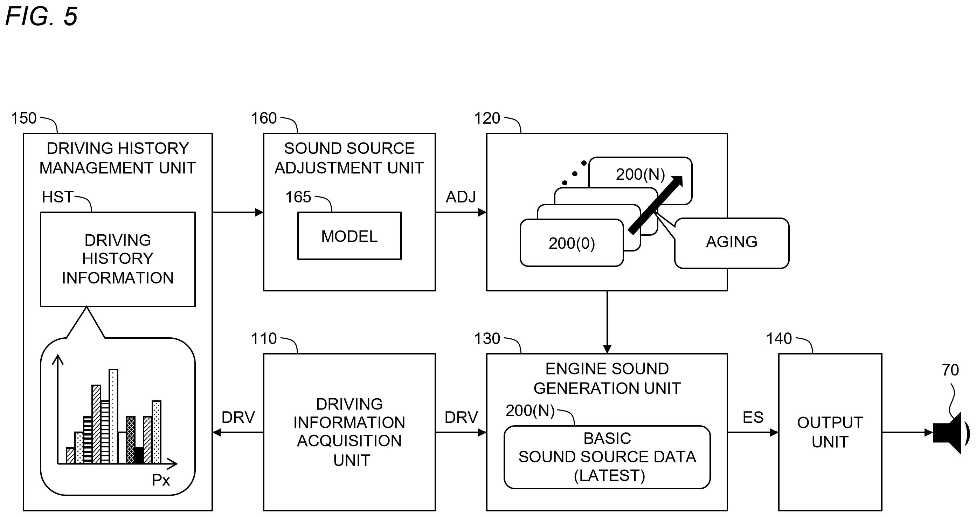

FIG. 5 is a block diagram showing an example of a functional configuration of the sound management system 100 according to the present embodiment. The sound management system 100 further includes a driving history management unit 150 and a sound source adjustment unit 160 in addition to the functional blocks shown in the above FIG. 2. These functional blocks may be realized by a cooperation between the processor 101 executing the sound management program 105 and the storage device 102.

The driving history management unit 150 stores and manages driving history information HST that indicates a driving history of the electric vehicle 10. More specifically, the driving history management unit 150 acquires the driving information DRV related to the electric vehicle 10 from the driving information acquisition unit 110 described above. As described above, the driving information DRV includes the sensor detection information detected by the sensors 11 mounted on the electric vehicle 10. The driving information DRV also includes the virtual engine rotation speed Ne. The driving history information HST corresponds to a history of the driving information DRV.

In particular, the driving information DRV includes the parameter Px (or a parameter equivalent thereto) that contributes to the change over time in the engine sound of the engine vehicle, as described in the above Section 2-1. The driving history management unit 150 may manage the history of the parameter Px for each parameter Px. That is, the driving history management unit 150 may generate and manage the driving history information HST for each parameter Px. For example, the driving history information HST for each parameter Px is managed in a histogram format.

The driving history management unit 150 acquires the driving information DRV from the driving information acquisition unit 110 at regular intervals. Every time the driving history management unit 150 acquires the driving information DRV, the driving history management unit 150 updates the driving history information HST based on the acquired driving information DRV.

The sound source adjustment unit 160 acquires the driving history information HST from the driving history management unit 150 and adjusts (updates) the basic sound source data 200 in accordance with the driving history of the electric vehicle 10. As described above, at least one of the sound pressure and the frequency of the sound provided by the basic sound source data 200 can be flexibly adjusted. Adjusting (updating) the basic sound source data 200 in accordance with the driving history makes it possible to change the pseudo engine sound generated based on the basic sound source data 200 in accordance with the driving history. That is, it is possible to change (age) the pseudo engine sound over time in accordance with the driving history of the electric vehicle 10.

More specifically, the sound source adjustment unit 160 is provided with a sound source adjustment model 165. The sound source adjustment model 165 is a model for determining how to adjust the basic sound source data 200 with respect to the driving history of the electric vehicle 10. For example, the sound source adjustment model 165 determines how to adjust the basic sound source data 200 compared to its initial state. As another example, the sound source adjustment model 165 may determine how to adjust the basic sound source data 200 compared to its current state. The sound source adjustment model 165 is generated in advance through a simulation based on an engine model and a vehicle model of the engine vehicle, and the like. It should be noted that the sound source adjustment model 165 is generated for each vehicle type.

Adjustment information ADJ indicates how to adjust the basic sound source data 200. For example, the adjustment information ADJ indicates how to adjust the basic sound source data 200 compared to its initial state. As another example, the adjustment information ADJ may indicate how to adjust the basic sound source data 200 compared to its current state. The sound source adjustment unit 160 acquires the driving history information HST, and acquires the adjustment information ADJ according to the driving history information HST by using the sound source adjustment model 165.

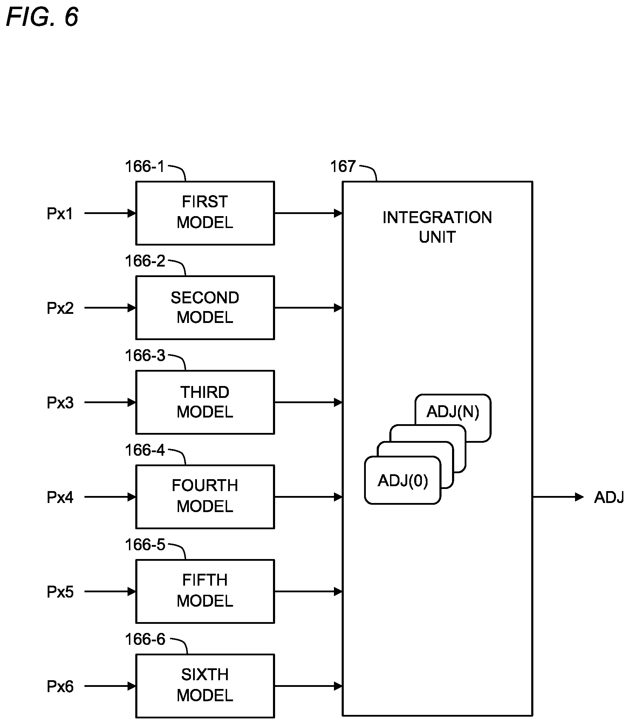

FIG. 6 is a block diagram showing an example of a configuration of the sound source adjustment model 165. The sound source adjustment model 165 includes a plurality of models 166 and an integration unit 167. In the example shown in FIG. 6, the plurality of models 166 includes first to sixth models 166-1 to 166-6. The first to sixth models 166-1 to 166-6 are models for estimating the changes over time in the engine sound in the first to sixth examples described in the above Section 2-1, respectively.

The first model 166-1 receives the history of the first parameter Px1 (i.e., the virtual engine rotation speed Ne). The first model 166-1 estimates a state of the change over time in the engine sound of the virtual engine based on the history of the first parameter Px1. The second model 166-2 receives the history of the second parameter Px2. The second model 166-2 estimates a state of the change over time in the engine sound of the virtual engine based on the history of the second parameter Px2. The third model 166-3 receives the history of the third parameter Px3. The third model 166-3 estimates a state of the change over time in the engine sound of the virtual engine based on the history of the third parameter Px3. The fourth model 166-4 receives the history of the fourth parameter Px4. The fourth model 166-4 estimates a state of the change over time in the engine sound of the virtual engine based on the history of the fourth parameter Px4. The fifth model 166-5 receives the history of the fifth parameter Px5. The fifth model 166-5 estimates a state of the change over time in the engine sound of the virtual engine based on the history of the fifth parameter Px5. The sixth model 166-6 receives the history of the sixth parameter Px6. The sixth model 166-6 estimates a state of the change over time in the engine sound of the virtual engine based on the history of the sixth parameter Px6. Each model 166 is generated in advance through a simulation based on the engine model and the vehicle model of the engine vehicle, and the like.

The integrating unit 167 integrates the results output from the first to sixth models 166-1 to 166-6 to acquire a state of the change over time in the engine sound as a whole. For example, the state of the change over time in the engine sound is represented as an amount of change in the engine sound (sound pressure, frequency) compared to its initial state. As another example, the state of the change over time in the engine sound may be represented as an amount of change in the engine sound (sound pressure, frequency) compared to the current state after the previous update. Based on the state of the change over time in the engine sound as a whole, the integration unit 167 acquires the adjustment information ADJ indicating how to adjust the basic sound source data 200. An algorithm for converting the state of the change over time in the engine sound into the adjustment information ADJ is also generated in advance through the simulation.

The integration unit 167 may store the adjustment information ADJ such that transition of the adjustment information ADJ can be known. That is, the integration unit 167 may store adjustment information ADJ(0) to ADJ(N) acquired at various timings. The adjustment information ADJ(0) is the oldest, and the adjustment information ADJ(N) is the latest.

It should be noted that the sound source adjustment model 165 is generated for each vehicle type. As exemplified in FIG. 3, when the driver specifies his or her preferred vehicle type, one of the plurality of types of basic sound source data 200 that is associated with the vehicle type specified by the driver is used to generate the pseudo engine sound. In this case, the sound source adjustment model 165 associated with the vehicle type specified by the driver is used.

The sound source adjustment unit 160 outputs the adjustment information ADJ to the sound source data management unit 120. The sound source data management unit 120 updates the basic sound source data 200 used to generate the pseudo engine sound in accordance with the adjustment information ADJ. In this manner, it is possible to change (age) the pseudo engine sound over time in accordance with the driving history of the electric vehicle 10.

The basic sound source data 200 may be updated at any frequency. For example, the basic sound source data 200 is updated every certain period (for example, every week, every month, or every few months). As another example, the basic sound source data 200 may be updated in near real time.

As shown in FIG. 5, the sound source data management unit 120 may store the basic sound source data 200 such that transition of the basic sound source data 200 can be known. That is, the sound source data management unit 120 may store basic sound source data 200(0) to 200(N) at various timings. The basic sound source data 200(0) is the initial state one, and the basic sound source data 200(N) is the latest version. The sound source data management unit 120 provides the engine sound generation unit 130 with the latest basic sound source data 200 (N). The engine sound generation unit 130 generates the pseudo engine sound by using the latest basic sound source data 200(N). In this manner, it is possible to change (age) the pseudo engine sound over time in accordance with the driving history of the electric vehicle 10.

It should be noted that the sound source data management unit 120 does not necessarily need to store all of the past basic sound source data 200. For example, the sound source data management unit 120 may store only the latest basic sound source data 200(N). This can save a storage capacity of the storage device 102.

The sound source data management unit 120 may store at least both the basic sound source data 200(0) in the initial state and the latest basic sound source data 200(N). In this case, it is possible to compare the pseudo engine sound in the initial state with the pseudo engine sound after aging.

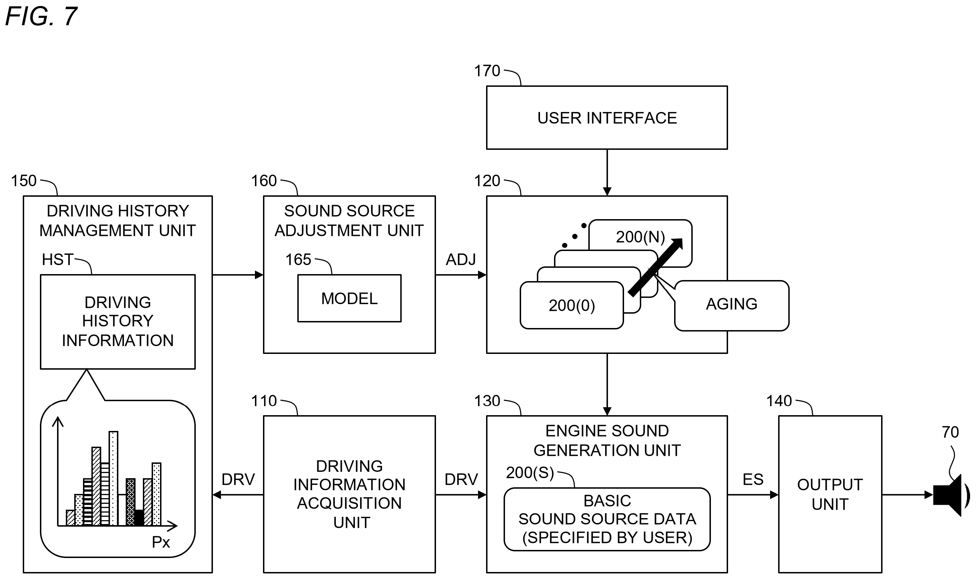

FIG. 7 is a block diagram showing another example of the functional configuration of the sound management system 100. In the example shown in FIG. 7, the sound management system 100 further includes a user interface 170. The user interface 170 includes an input device and an output device. Examples of the input device include a touch panel, a button, a switch, a keyboard, a microphone, and the like. The sound source data management unit 120 stores a plurality of types of basic sound source data 200(0) to 200(N) at various timings. A user (driver) of the electric vehicle 10 specifies, via the user interface 170, a desired timing of the pseudo engine sound. The sound source data management unit 120 selects a basic sound source data 200(S) at or near the timing specified by the driver from among the basic sound source data 200(0) to 200(N). The sound source data management unit 120 provides the engine sound generation unit 130 with the selected basic sound source data 200 (S). The engine sound generation unit 130 generates the pseudo engine sound based on the latest basic sound source data 200(N). The user (driver) can switch the pseudo engine sound depending on his or her mood. In addition, the user (driver) can compare various pseudo engine sounds.

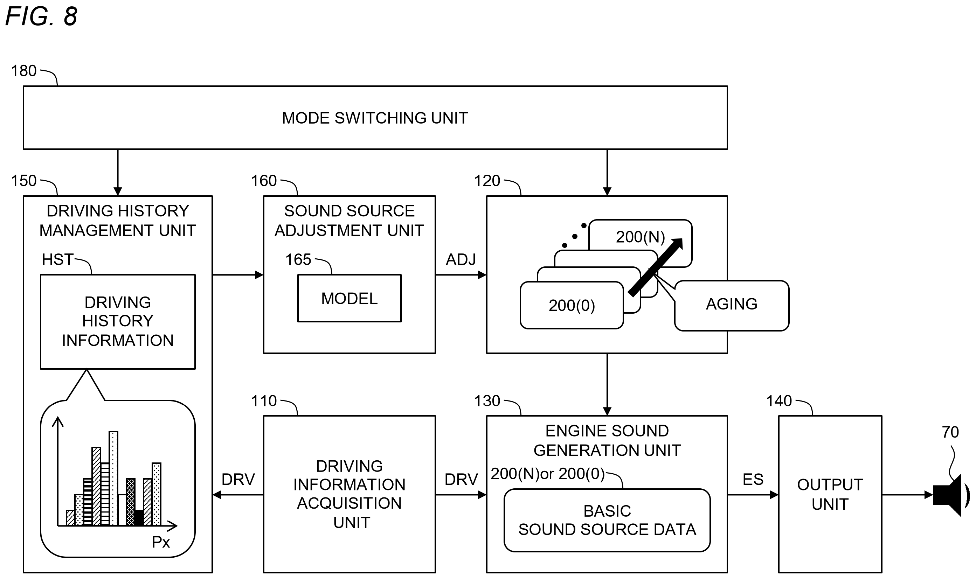

FIG. 8 is a block diagram showing yet another example of the functional configuration of the sound management system 100. In the example shown in FIG. 8, the sound management system 100 has a plurality of different modes regarding aging of the pseudo engine sound. More specifically, a first mode is a "aging mode" that changes the pseudo engine sound in accordance with the driving history of the electric vehicle 10. On the other hand, a second mode is a "non-aging mode" that changes the pseudo engine sound in accordance with the driving history of the electric vehicle 10. It is possible to switch the first mode and the second mode. For this purpose, the sound management system 100 shown in FIG. 8 further includes a mode switching unit 180.

In the first mode, the mode switching unit 180 instructs the sound source data management unit 120 to continue updating the basic sound source data 200. In the first mode, the sound source data management unit 120 provides the engine sound generation unit 130 with the latest basic sound source data 200 (N). In the first mode, the engine sound generation unit 130 generates the pseudo engine sound by using the latest basic sound source data 200(N).

On the other hand, in the second mode, the mode switching unit 180 instructs the sound source data management unit 120 not to update the basic sound source data 200. In the second mode, the mode switching unit 180 may instruct the driving history management unit 150 to stop updating the driving history information HST. In the second mode, the sound source data management unit 120 provides the engine sound generation unit 130 with, for example, the basic sound source data 200(0) in the initial state. The engine sound generation unit 130 generates the pseudo engine sound by using the basic sound source data 200(0) in the initial state.

The mode switching unit 180 may be linked to the user interface 170. In this case, the user (driver) of the electric vehicle 10 can switch between the first mode and the second mode via the user interface 170 and the mode switching unit 180.

The first mode and the second mode may be used separately for the pseudo engine sound output to the inside of the vehicle and the pseudo engine sound output to the outside of the vehicle. For example, the speaker 70 includes an interior speaker that outputs sound to a vehicle cabin and an exterior speaker that outputs sound to the outside the vehicle. The sound management system 100 separately manages the pseudo engine sound output from the interior speaker and the pseudo engine sound output from the exterior speaker. For example, the pseudo engine sound output from the interior speaker is generated in the first mode. This allows the driver to enjoy the aging of the pseudo engine sound. On the other hand, the pseudo engine sound output from the exterior speaker is generated in the second mode. Processing load in the second mode is lower than that in the first mode, and thus the overall processing load is reduced.

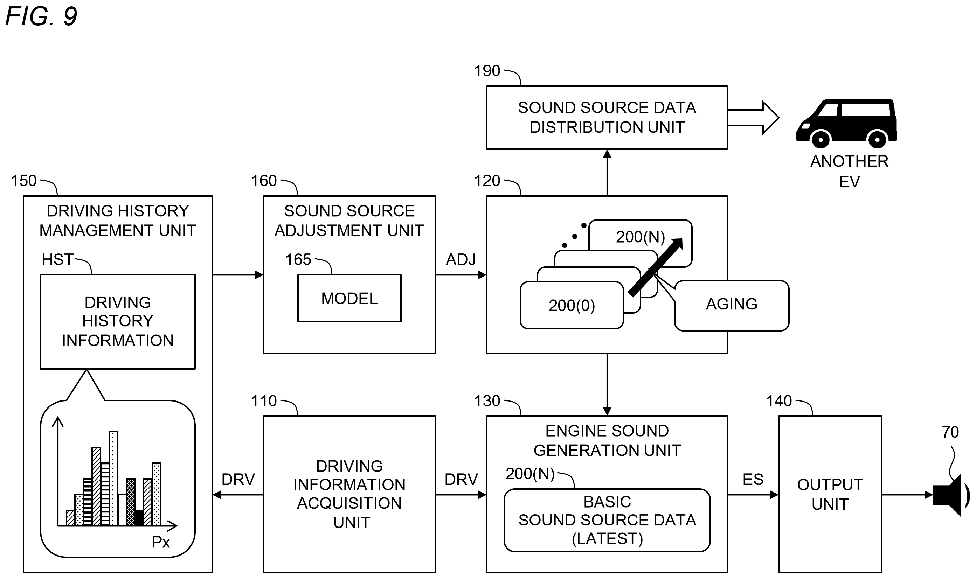

FIG. 9 is a block diagram showing yet another example of the functional configuration of the sound management system 100. In the example shown in FIG. 9, the pseudo engine sound that has been aged in accordance with the driving history of a certain electric vehicle 10 is provided to another electric vehicle 10. For this purpose, the sound management system 100 further includes a sound source data distribution unit 190. The sound source data distribution unit 190 acquires one or more basic sound source data 200 including the latest basic sound source data 200 (N) from the sound source data management unit 120. Then, the sound source data distribution unit 190 provides another electric vehicle with the one or more basic sound source data 200 including the latest basic sound source data 200(N). The other electric vehicle reproduces the pseudo engine sound based on the aged basic sound source data 200 acquired. This allows a user of the other electric vehicle to immediately enjoy the aged pseudo engine sound. It should be noted that the provision of the aged pseudo engine sounds may be conducted for a fee. This allows the user of the electric vehicle 10 being the provision source to earn a profit.

A combination of two or more of the examples shown in FIGS. 7 to 9 is also possible.

### 2-3. Various Operation Embodiments

Various operation embodiments of the sound management system 100 according to the present embodiment will be described below.

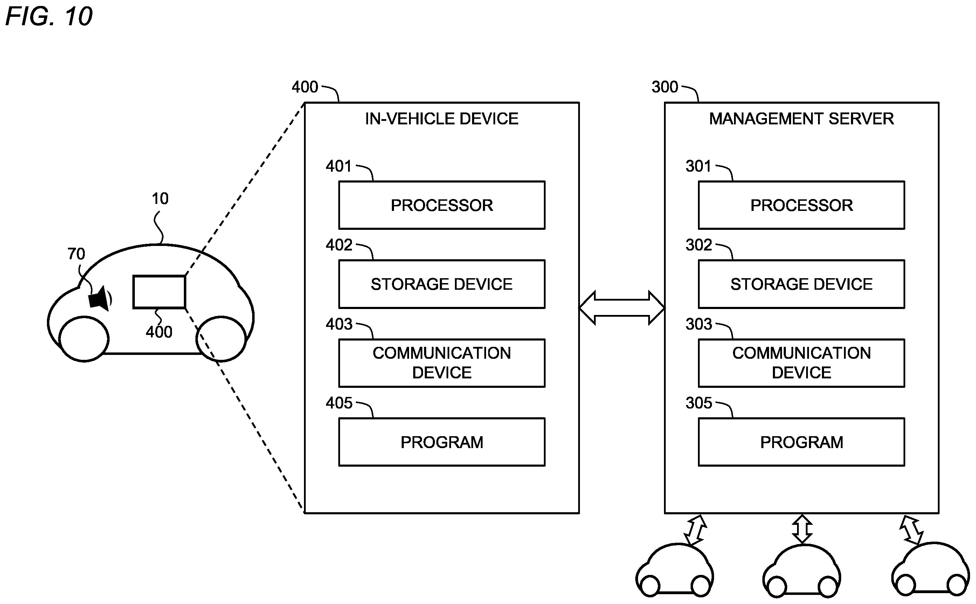

FIG. 10 is a block diagram for explaining an in-vehicle device 400 and a management server 300 that constitute the sound management system 100. The in-vehicle device 400 and the management server 300 can communicate with each other via a communication network.

The in-vehicle device 400 is mounted on the electric vehicle 10. The in-vehicle device 400 includes one or more processors 401 (hereinafter simply referred to as a processor 401), one or more storage devices 402 (hereinafter simply referred to as a storage device 402), and a communication device 403. The processor 401 executes a variety of processing. Examples of the processor 401 include a general-purpose processor, a special-purpose processor, a CPU, a GPU, an ASIC, an FPGA, an integrated circuit, a conventional circuit, and/or a combination thereof. The processor 401 may also be referred to as circuitry or processing circuitry. The storage device 402 stores a variety of information. Examples of the storage device 402 include a volatile memory, a non-volatile memory, an HDD, an SSD, and the like. The communication device 403 communicates with the management server 300. The functions of the in-vehicle device 400 are realized by a cooperation of the processor 401 and the storage device 402. A program 405 is a computer program executed by the processor 401. The functions of the in-vehicle device 400 may be realized by a cooperation of the processor 401 executing the program 405 and the storage device 402. The program 405 is stored in the storage device 402. Alternatively, the program 405 may be recorded on a non-transitory computer-readable recording medium.

The management server 300 includes one or more processors 301 (hereinafter simply referred to as a processor 301 ), one or more storage devices 302 (hereinafter simply referred to as a storage device 302 ), and a communication device 303. The processor 301 executes a variety of processing. Examples of the processor 301 include a general-purpose processor, a special-purpose processor, a CPU, a GPU, an ASIC, an FPGA, an integrated circuit, a conventional circuit, and/or a combination thereof. The processor 301 may also be referred to as circuitry or processing circuitry. The storage device 302 stores a variety of information. Examples of the storage device 302 include a volatile memory, a non-volatile memory, an HDD, an SSD, and the like. The communication device 303 communicates with the in-vehicle devices 400 of a large number of electric vehicles 10. The functions of the management server 300 is realized by a cooperation of the processor 301 and the storage device 302. A program 305 is a computer program executed by the processor 301. The functions of the management server 300 may be realized by a cooperation of the processor 301 executing the program 305 and the storage device 302. The program 305 is stored in the storage device 302. Alternatively, the program 305 may be recorded on a non-transitory computer-readable recording medium.

Any one of the processor 401 of the in-vehicle device 400 and the processor 301 of the management server 300, or a combination thereof, corresponds to the one or more processors 101 shown in FIG. 1. Any one of the storage device 402 of the in-vehicle device 400 and the storage device 302 of the management server 300, or a combination thereof, corresponds to the one or more storage devices 102 shown in FIG. 1. Any one of the program 405 of the in-vehicle device 400 and the program 305 of the management server 300, or a combination of these, corresponds to the sound management program 105 shown in FIG. 1.

### 2-3-1. First example

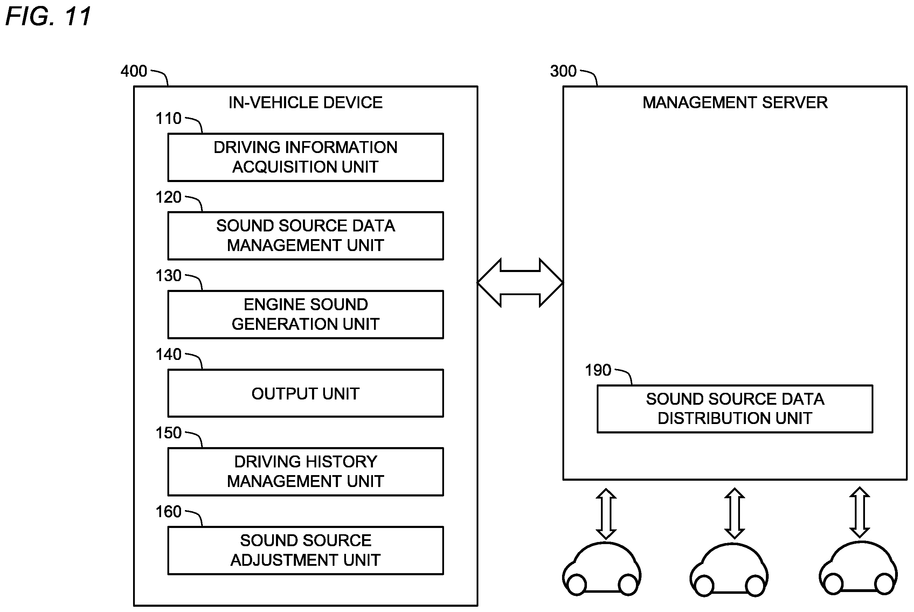

FIG. 11 is a block diagram for explaining a first example of the operation embodiment of the sound management system 100. In the first example, all of the driving information acquisition unit 110, the sound source data management unit 120, the engine sound generation unit 130, the output unit 140, the driving history management unit 150, and the sound source adjustment unit 160 are included in the in-vehicle device 400. The aging of the pseudo engine sound is carried out in the electric vehicle 10.

The sound source data distribution unit 190 is included in the management server 300. The sound source data distribution unit 190 of the management server 300 communicates with the in-vehicle device 400 of the electric vehicle 10 and acquires the basic sound source data 200 managed by the in-vehicle device 400. Then, the sound source data distribution unit 190 provides another electric vehicle with the acquired basic sound source data 200.

### 2-3-2. Second example

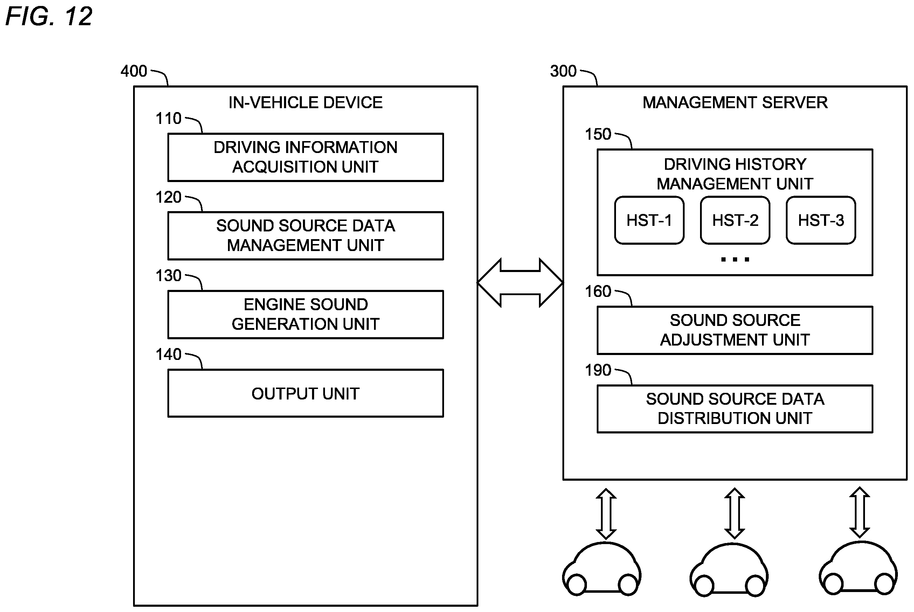

FIG. 12 is a block diagram for explaining a second example of the operation embodiment of the sound management system 100. In the second example, the driving history management unit 150 and the sound source adjustment unit 160 are included in the management server 300, as compared with the first example described above. The driving history management unit 150 collectively manages the driving history information HST (HST-1, HST-2, HST-3, ...) of a plurality of electric vehicles 10. For this reason, the driving history information HST is associated with a vehicle ID. The driving history management unit 150 manages the driving history information HST for each vehicle ID.

The driving information acquisition unit 110 of the in-vehicle device 400 uploads a set of the vehicle ID and the driving information DRV to the management server 300. A frequency of the upload is arbitrary. The driving history management unit 150 of the management server 300 updates the driving history information HST associated with the vehicle ID based on the received driving information DRV.

Furthermore, the sound source adjustment unit 160 of the management server 300 generates the adjustment information ADJ for the vehicle ID based on the driving history information HST. At this time, the sound source adjustment model 165 associated with the vehicle type specified by the user of the electric vehicle 10 is used. Then, the sound source adjustment unit 160 transmits the generated adjustment information ADJ for the vehicle ID to the electric vehicle 10 of the vehicle ID.

The sound source data management unit 120 of the electric vehicle 10 with the vehicle ID updates the basic sound source data 200 in accordance with the adjustment information ADJ transmitted from the management server 300.

According to the second example, it is possible to reduce processing load on the in-vehicle device 400. Furthermore, it is possible to save a storage capacity of the storage device 402 of the in-vehicle device 400. In particular, since the amount of data of the driving history information HST tends to be large, it is possible to effectively save the storage capacity of the storage device 402 of the in-vehicle device 400.

As a modification example of the second example, the driving history management unit 150 may be included in the management server 300, and the sound source adjustment unit 160 may be included in the in-vehicle device 400. In this case, the sound source adjustment unit 160 of the in-vehicle device 400 acquires the driving history information HST associated with the vehicle ID from the driving history management unit 150 of the management server 300. The sound source adjustment unit 160 may delete the driving history information HST after generating the adjustment information ADJ based on the driving history information HST.

### 2-3-3. Third example

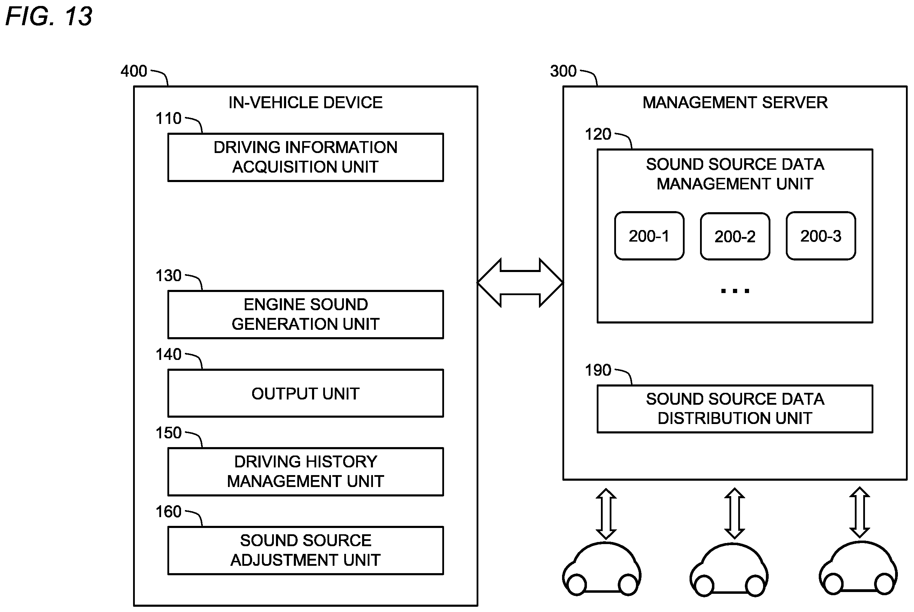

FIG. 13 is a block diagram for explaining a third example of the operation embodiment of the sound management system 100. In the third example, the sound source data management unit 120 is included in the management server 300, as compared with the first example described above. The sound source data management unit 120 collectively manages the basic sound source data 200 (200-1, 200-2, 200-3, ...) used in a plurality of electric vehicles 10. For this purpose, the basic sound source data 200 is associated with a vehicle ID. The sound source data management unit 120 manages the basic sound source data 200 for each vehicle ID.

The sound source adjustment unit 160 of the in-vehicle device 400 downloads the basic sound source data 200 associated with the vehicle ID from the management server 300. The sound source adjustment unit 160 updates the basic sound source data 200 based on the adjustment information ADJ. Then, the sound source adjustment unit 160 uploads a set of the updated basic sound source data 200 and the vehicle ID to the management server 300. The sound source data management unit 120 of the management server 300 stores the latest basic sound source data 200 associated with the vehicle ID.

According to the third example, the basic sound source data 200 (200-1, 200-2, 200-3, ...) used in a plurality of electric vehicles 10 are collectively managed by the management server 300. This is advantageous from the viewpoint of management and distribution of the basic sound source data 200.

### 2-3-4. Fourth example

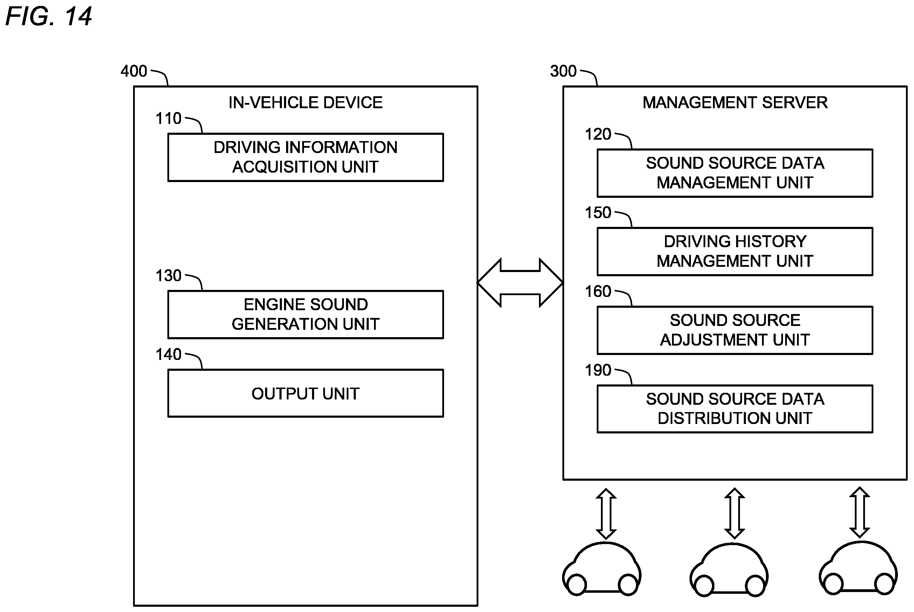

FIG. 14 is a block diagram for explaining a fourth example of the operation embodiment of the sound management system 100. In the fourth example, the sound source data management unit 120, the driving history management unit 150, and the sound source adjustment unit 160 are included in the management server 300, as compared with the first example described above. The sound source data management unit 120 is the same as in the third example described above. The driving history management unit 150 is the same as in the second example described above.

The sound source adjustment unit 160 of the management server 300 generates the adjustment information ADJ for the vehicle ID based on the driving history information HST. Furthermore, the sound source adjustment unit 160 updates the basic sound source data 200 associated with the vehicle ID based on the adjustment information ADJ. The sound source data management unit 120 of the management server 300 transmits the latest basic sound source data 200 associated with the vehicle ID to the electric vehicle 10 with the vehicle ID.

According to the fourth example, the processing load on the in-vehicle device 400 is lightest. Moreover, the storage capacity of the storage device 402 of the in-vehicle device 400 is saved the most.

### 2-4. Effects

According to the present embodiment, the pseudo engine sound is output through the speaker 70 mounted on the electric vehicle 10. The pseudo engine sound changes in accordance with the driving history of the electric vehicle 10. As a result, a change over time (aging) of an engine sound depending on the driving history in an actual engine vehicle can be reproduced. It is therefore possible to increase satisfaction of the driver who seeks more realism.

### 3. APPLICATION TO ELECTRIC VEHICLE HAVING MANUAL TRANSMISSION (MT) MODE

An electric motor used as a power unit for running in a general electric vehicle have torque characteristics that are significantly different from those of an internal combustion engine that has been used as a power unit for running in a conventional vehicle (CV). Due to the difference in the torque characteristics of the power unit, the CV requires a transmission, whereas the electric vehicle generally do not have a transmission. Of course, a typical electric vehicle does not have a manual transmission (MT) for changing a gear ratio in response to a driver's manual operation. For this reason, there is a big difference in a driving feeling between driving a conventional vehicle having a manual transmission (hereinafter referred to as an MT vehicle) and driving an electric vehicle.

Meanwhile, in the case of the electric motor, it is possible to control the torque relatively easily by controlling an applied voltage and a field system. Therefore, in the case of the electric motor, implementing appropriate control makes it possible to acquire desired torque characteristics within an operating range of the electric motor. By taking advantage of this feature, it is possible to control the torque of the electric vehicle to imitate the torque characteristics specific to the MT vehicle. In addition, the electric vehicle can be equipped with a pseudo shifter so that the driver can get the same driving feeling as in the MT vehicle. These make it possible to imitate the MT vehicle in the electric vehicle.

That is, the electric vehicle controls an output of the electric motor so as to imitate driving characteristics (torque characteristics) specific to the MT vehicle. The driver operates the pseudo shifter to perform a pseudo manual gearshift operation. In response to the pseudo manual gearshift operation performed by the driver, the electric vehicle changes its driving characteristics (torque characteristics) to imitate the MT vehicle. This allows the driver of the electric vehicle to feel as if he or she is driving the MT vehicle. Such a mode of controlling the electric motor for imitating the driving characteristics of the MT vehicle and the manual gearshift operation is hereinafter referred to as a "manual mode" or an "MT mode."

The electric vehicle 10 according to the present disclosure may be provided with such the manual mode (MT mode). In the MT mode, the electric vehicle 10 generates the pseudo engine sound in accordance with the driver's driving operation, and outputs the pseudo engine sound through the speaker 70. Not only the driving operation of the MT vehicle but also the engine sound of the MT vehicle are reproduced, which can increase the satisfaction of the driver who seeks realism. Furthermore, the change over time (aging) in the engine sound of the MT vehicle can be also reproduced as described above, which can further increase the satisfaction of the driver who seeks realism.

Hereinafter, examples of a configuration of the electric vehicle 10 having the manual mode (MT mode) will be described.

### 3-1. First Configuration Example (Sequential Shifter)

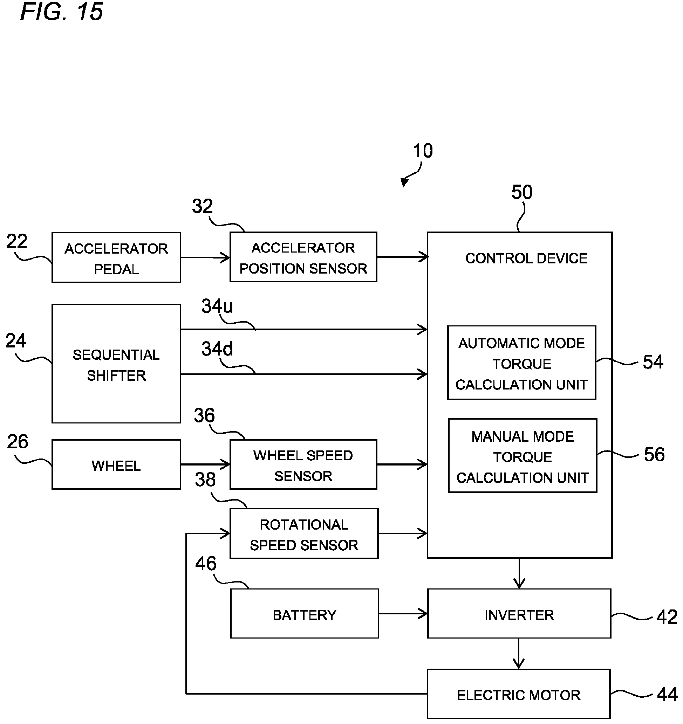

FIG. 15 is a block diagram showing a first example of the configuration of a power control system of the electric vehicle 10 according to the present embodiment. The electric vehicle 10 is provided with an electric motor 44, a battery 46, and an inverter 42. The electric motor 44 is a power unit for running. The battery 46 stores electrical energy to drive the electric motor 44. That is, the electric vehicle 10 is a battery electric vehicle (BEV) that runs based on the electric energy stored in the battery 46. The inverter 42 converts DC power input from the battery 46 during acceleration into drive power for the electric motor 44. The inverter 42 also converts regenerative power input from the electric motor 44 during deceleration into DC power and charges the battery 46.

The electric vehicle 10 is provided with an accelerator pedal 22 that is used by the driver to input an acceleration request to the electric vehicle 10. The accelerator pedal 22 is provided with an accelerator position sensor 32 for detecting an accelerator opening.

The electric vehicle 10 is provided with a sequential shifter 24. The sequential shifter 24 may be a paddle-type shifter or may be a lever-type pseudo shifter.

The paddle shifter is a dummy that is different from an actual paddle shifter. The paddle shifter has a structure similar to that of a paddle shifter provided in a clutch pedal-less MT vehicle. The paddle shifter is mounted on a steering wheel. The paddle shifter has an upshift switch and a downshift switch that determine an operating position. The upshift switch generates an upshift signal 34u when pulled towards the driver, and the downshift switch generates a downshift signal 34d when pulled towards the driver.

On the other hand, the lever-type pseudo shifter is a dummy that is different from an actual shifter, as in the case of the paddle-type shifter. The lever-type pseudo shifter has a structure similar to that of a lever-type shifter provided in a clutch pedal-less MT vehicle. The lever-type pseudo shifter is configured to output an upshift signal 34u when a shift lever is tilted forward, and to output a downshift signal 34d when the shift lever is tilted backward.

A wheel 26 of the electric vehicle 10 is provided with a wheel speed sensor 36. The wheel speed sensor 36 is used as a vehicle speed sensor for detecting a vehicle speed of the electric vehicle 10. In addition, the electric motor 44 is provided with a rotational speed sensor 38 for detecting a rotation speed thereof.

The electric vehicle 10 is provided with a control device 50. The control device 50 is typically an electronic control unit (ECU) mounted on the electric vehicle 10. The control device 50 may be a combination of multiple ECUs. The control device 50 includes an interface, a memory, and a processor. The interface is connected to the in-vehicle network. The memory includes a RAM for temporarily storing data and a ROM for storing programs executable by the processor and a variety of data related to the programs. The program is composed of a plurality of instructions. The processor reads the program and data from the memory, executes the program, and generates a control signal based on the signals acquired from each sensor.

For example, the control device 50 controls the electric motor 44 by PWM control of the inverter 42. The control device 50 receives signals from the accelerator position sensor 32, the sequential shifter 24 (the upshift switch and the downshift switch when the sequential shifter 24 is the paddle shifter), the wheel speed sensor 36, and the rotational speed sensor 38. The control device 50 processes these signals and calculates a motor torque command value for the PWM control of the inverter 42.

The control device 50 has control modes including an automatic mode (EV mode) and the manual mode (MT mode). The automatic mode is a normal control mode for driving the electric vehicle 10 as a general electric vehicle. The automatic mode is programmed to continuously change the output of the electric motor 44 in accordance with an operation of the accelerator pedal 22. On the other hand, the manual mode is a control mode for driving the electric vehicle 10 like the MT vehicle. The manual mode is programmed to change the output characteristics of the electric motor 44 for an operation of the accelerator pedal 22 in accordance with the upshift operation and the downshift operation of the sequential shifter 24. In other words, the manual mode is a control mode that can change the output of the electric motor 44 in response to a driving operation of a vehicle component other than the accelerator pedal 22 and the brake pedal. It is possible to switch between the automatic mode (EV mode) and the manual mode (MT mode).

The control device 50 includes an automatic mode torque calculation unit 54 and a manual mode torque calculation unit 56. Each of the units 54 and 56 may be an independent ECU, or may be an ECU function that is achieved by the processor executing the program recorded in the memory.

The automatic mode torque calculation unit 54 has a function of calculating a motor torque when controlling the electric motor 44 in the automatic mode. The automatic mode torque calculation unit 54 stores a motor torque command map. The motor torque command map is a map for determining the motor torque from the accelerator opening and the rotational speed of the electric motor 44. The signal from the accelerator position sensor 32 and the signal from the rotational speed sensor 38 are input to each parameter of the motor torque command map. The motor torque command map outputs the motor torque corresponding to these signals. Therefore, in the automatic mode, even if the driver operates the sequential shifter 24, the operation is not reflected in the motor torque.

The manual mode torque calculation unit 56 includes is provided with an MT vehicle model. The MT vehicle model is a model for calculating a drive wheel torque that is supposed to be obtained in response to the operations of the accelerator pedal 22 and the sequential shifter 24, assuming that the electric vehicle 10 is the MT vehicle.

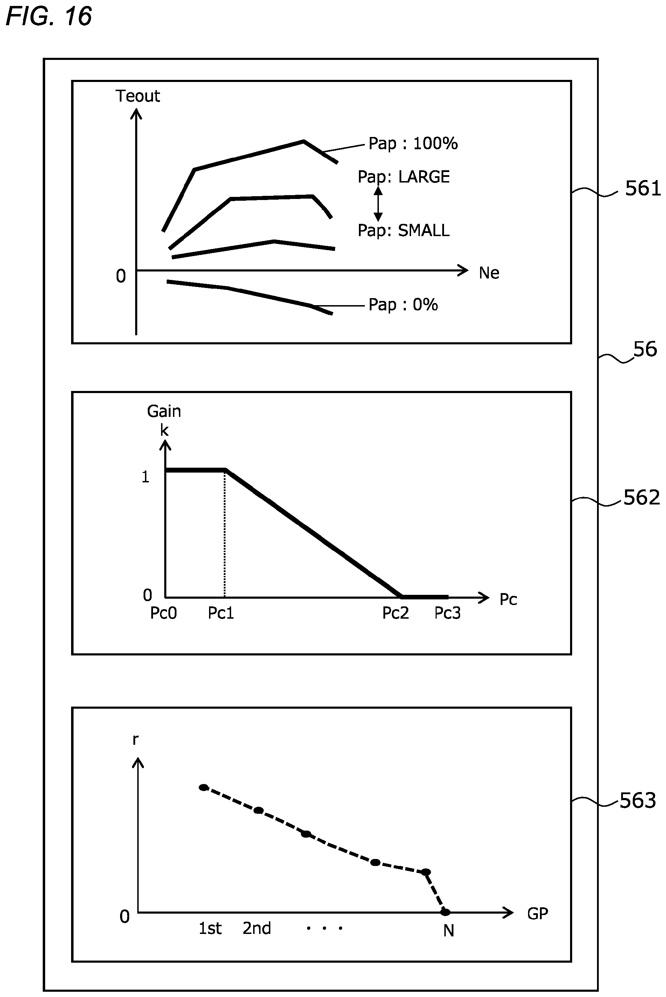

The MT vehicle model provided in the manual mode torque calculation unit 56 will be described with reference to FIG. 16. As shown in FIG. 16, the MT vehicle model includes an engine model 561, a clutch model 562, and a transmission model 563. It should be noted that an engine, a clutch, and a transmission that are virtually realized by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates a virtual engine rotation speed Ne and a virtual engine output torque Teout. The virtual engine rotation speed Ne is calculated based on a wheel rotation speed Nw, an overall reduction ratio R, and a slip ratio Rslip of the virtual clutch. For example, the virtual engine rotation speed Ne is expressed by the following equation (1).$Ne = Nw \times R / \left(1-Rslip\right)$

The virtual engine output torque Teout is calculated from the virtual engine rotation speed Ne and an accelerator opening Pap. As shown in FIG. 16, a map that defines a relationship between the accelerator opening Pap, the virtual engine rotation speed Ne, and the virtual engine output torque Teout is used for calculating the virtual engine output torque Teout. According to the map, the virtual engine output torque Teout associated with the virtual engine rotation speed Ne is given for each accelerator opening Pap. The torque characteristics shown in FIG. 16 can be set to characteristics assuming a gasoline engine, or can be set to characteristics assuming a diesel engine. Furthermore, the torque characteristics can be set to characteristics assuming a naturally aspirated engine, or characteristics assuming a supercharged engine.

The clutch model 562 calculates a torque transmission gain k. The torque transmission gain k is a gain for calculating a degree of torque transmission of the virtual clutch according to a virtual clutch opening degree Pc. The virtual clutch opening degree Pc is normally 0%, and is temporarily opened to 100% in conjunction with switching of a virtual gear position of the virtual transmission. The clutch model 562 has a map as shown in FIG. 16. According to the map, the torque transmission gain k is given with respect to the virtual clutch opening degree Pc. In FIG. 16, Pc0 corresponds to a position where the virtual clutch opening degree Pc is 0%, and Pc3 corresponds to a position where the virtual clutch opening degree Pc is 100%. A range from Pc0 to Pc1 and a range from Pc2 to Pc3 are dead zones in which the torque transmission gain k does not change depending on the virtual clutch opening degree Pc. The clutch model 562 calculates a clutch output torque Tcout by using the torque transmission gain k. The clutch output torque Tcout is a torque output from the virtual clutch. For example, the clutch output torque Tcout is given by a product of the virtual engine output torque Teout and the torque transmission gain k (Tcout = Teout × k).

In addition, the clutch model 562 calculates the slip ratio Rslip. The slip ratio Rslip is used in the calculation of the virtual engine rotation speed Ne in the engine model 561. In order to calculate the slip ratio Rslip, a map that gives the slip ratio Rslip with respect to the virtual clutch opening degree Pc can be used, as in the case of the torque transmission gain k.

The transmission model 563 calculates a gear ratio (transmission gear ratio) r. The gear ratio r is determined by a virtual gear position GP in the virtual transmission. The virtual gear position GP is increased by one stage in response to the upshift operation of the sequential shifter 24. On the other hand, the virtual gear position GP is decreased by one stage in response to the downshift operation of the sequential shifter 24. The transmission model 563 has a map as shown in FIG. 16. According to the map, the gear ratio r is given with respect to the virtual gear position GP such that the gear ratio r decreases as the virtual gear position GP increases. The transmission model 563 calculates a transmission output torque Tgout by using the gear ratio r obtained from the map and the clutch output torque Tcout. For example, the transmission output torque Tgout is given by a product of the clutch output torque Tcout and the gear ratio r (Tgout = Tcout × r). The transmission output torque Tgout changes discontinuously in response to the change in the gear ratio r. Such the discontinuous change in the transmission output torque Tgout generates a gear shift shock, which can create a feeling like a vehicle equipped with a stepped transmission.

The MT vehicle model calculates a drive wheel torque Tw by using a predetermined reduction ratio rr. The reduction ratio rr is a fixed value determined by a mechanical structure from the virtual transmission to the drive wheel. A value obtained by multiplying the reduction ratio rr by the gear ratio r is the overall reduction ratio R mentioned above. The MT vehicle model calculates the drive wheel torque Tw from the transmission output torque Tgout and the reduction ratio rr. For example, the drive wheel torque Tw is given by a product of the transmission output torque Tgout and the reduction ratio rr (Tw = Tgout × rr).

The control device 50 converts the drive wheel torque Tw calculated by the MT vehicle model into a required motor torque Tm. The required motor torque Tm is a motor torque required to achieve the drive wheel torque Tw calculated by the MT vehicle model. A reduction ratio from an output shaft of the electric motor 44 to the drive wheel is used to convert the drive wheel torque Tw into the required motor torque Tm. The control device 50 then controls the inverter 42 in accordance with the required motor torque Tm to control the electric motor 44.

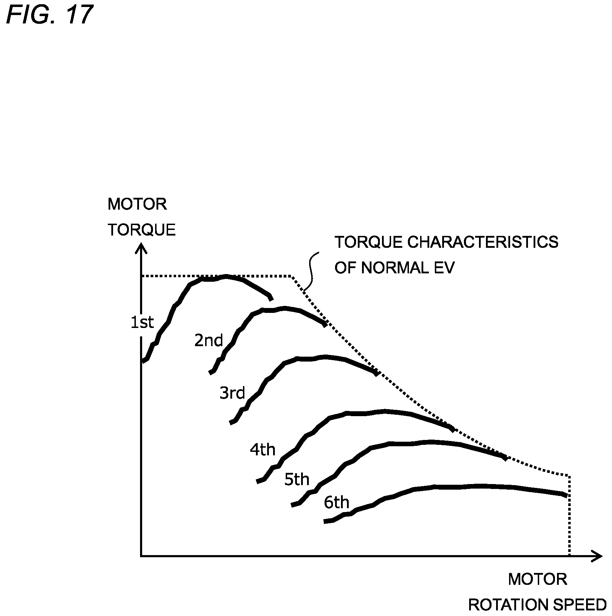

FIG. 17 is a diagram showing the torque characteristics of the electric motor 44 achieved by the motor control using the MT vehicle model, compared to the torque characteristics of the electric motor 44 achieved by normal motor control in an electric vehicle (EV). According to the motor control using the MT vehicle model, as shown in FIG. 17, it is possible to achieve such the torque characteristics that imitate the torque characteristics of the MT vehicle in accordance with the virtual gear position set by the sequential shifter 24 (indicated by solid lines in the figure). It should be noted that in FIG. 17, the number of gear positions is six.

### 4-2. Second Configuration Example

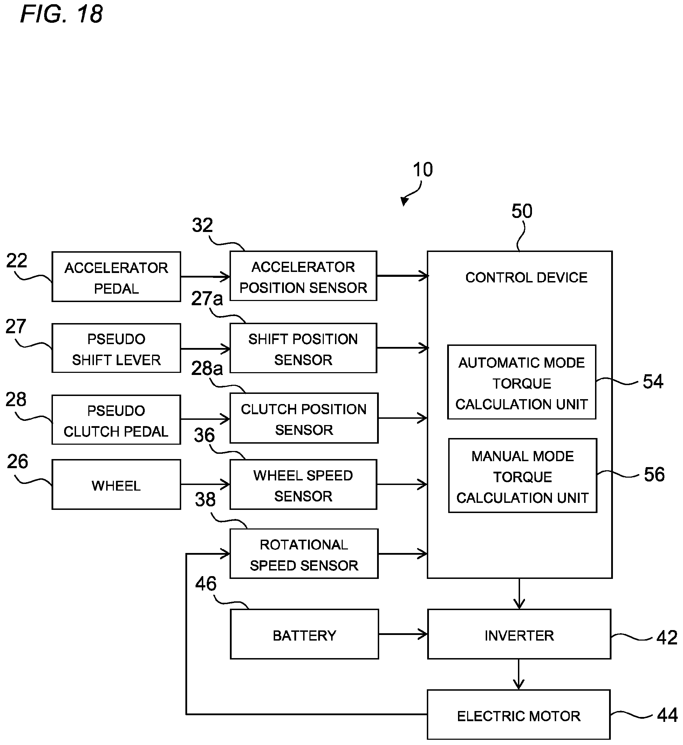

FIG. 18 is a block diagram showing a second configuration example of the power control system of the electric vehicle 10 according to the present embodiment. Here, only the configurations that differ from the first configuration example described above will be explained. More specifically, in the second configuration example, the electric vehicle 10 is provided with a pseudo shift lever (pseudo shift device) 27 and a pseudo clutch pedal 28 instead of the sequential shifter 24 provided in the first configuration example. The pseudo shift lever 27 and the pseudo clutch pedal 28 are merely dummies that are different from an actual shift lever and an actual clutch pedal, respectively.

The pseudo shift lever 27 has a structure that imitates a shift lever provided in the MT vehicle. An arrangement and an operational feeling of the pseudo shift lever 27 are the same as those of an actual MT vehicle. The pseudo shift lever 27 has positions corresponding to respective gear positions including, for example, first, second, third, fourth, fifth, sixth, reverse, and neutral. The pseudo shift lever 27 is provided with a shift position sensor 27a for detecting the gear position by determining which position the pseudo shift lever 27 is in.

The pseudo clutch pedal 28 has a structure that imitates a clutch pedal provided in the MT vehicle. An arrangement and an operational feeling of the pseudo clutch pedal 28 are the same as those of an actual MT vehicle. The pseudo clutch pedal 28 is operated when the pseudo shift lever 27 is operated. That is, when the driver wants to change the gear position setting using the pseudo shift lever 27, the driver depresses the pseudo clutch pedal 28. After the change in the gear position setting is completed, the driver stops depressing and returns the pseudo clutch pedal 28 to its original position. The pseudo clutch pedal 28 is provided with a clutch position sensor 28a for detecting the amount of depression of the pseudo clutch pedal 28.

The control device 50 receives signals from the accelerator position sensor 32, the shift position sensor 27a, the clutch position sensor 28a, the wheel speed sensor 36, and the rotational speed sensor 38. The control device 50 processes these signals and calculates a motor torque command value for the PWM control of the inverter 42.

The control device 50 includes the automatic mode and the manual mode as control modes, as in the case of the first configuration example described above. The automatic mode is programmed to continuously change the output of the electric motor 44 in accordance with an operation of the accelerator pedal 22. On the other hand, the manual mode is a control mode for driving the electric vehicle 10 like the MT vehicle. The manual mode is programmed to change the output and the output characteristics of the electric motor 44 for an operation of the accelerator pedal 22 in accordance with an operation of the pseudo clutch pedal 28 and an operation of the pseudo shift lever (pseudo shift device) 27. In other words, the manual mode is a control mode that can change the output of the electric motor 44 in response to a driving operation of a vehicle component other than the accelerator pedal 22 and the brake pedal.

The vehicle model provided in the manual mode torque calculation unit 56 is the same as that shown in FIG. 16. However, the virtual clutch opening degree Pc is replaced with the depression amount of the pseudo clutch pedal 28 detected by the clutch position sensor 28a. Also, the virtual gear position GP is determined by the position of the pseudo shift lever 27 detected by the shift position sensor 27a.

### [EXPLANATION OF REFERENCE SIGNS]

- 10: electric vehicle
- 11: sensor
- 44: electric motor
- 70: speaker
- 100: sound management system
- 110: driving information acquisition unit
- 120: sound source data management unit
- 130: engine sound generation unit
- 140: output unit
- 150: driving history management unit
- 160: sound source adjustment unit
- 165: sound source adjustment model
- 170: user interface
- 180: mode switching unit
- 190: sound source data distribution unit
- 200: basic sound source data
- 300: management server
- 400: in-vehicle device
- DRV: driving information
- ES: engine sound data
- HST: driving history information

## Claims

1. A sound management system applied to an electric vehicle that uses an electric motor as a power unit for running,
the sound management system comprising one or more processors configured to generate a pseudo engine sound and to output the pseudo engine sound through a speaker mounted on the electric vehicle, wherein
the one or more processors are configured to acquire driving history information indicating a driving history of the electric vehicle and to change the pseudo engine sound in accordance with the driving history.

2. The sound management system according to claim 1, wherein
the one or more processors are configured to generate the pseudo engine sound so as to reproduce a change in an engine sound over time in an engine vehicle according to the driving history.

3. The sound management system according to claim 1, wherein
the one or more processors are configured to acquire a virtual engine rotation speed assuming that the electric vehicle is driven by a virtual engine, and
the driving history of the electric vehicle includes a history of the virtual engine rotation speed.

4. The sound management system according to claim 1, wherein
the driving history of the electric vehicle includes at least one of a total driving time, a total driving distance, a history of longitudinal acceleration, a history of lateral acceleration, a history of vehicle body tilt, and a history of altitude.

5. The sound management system according to claim 1, wherein
the one or more processors are configured to:
in a first mode, change the pseudo engine sound in accordance with the driving history; and
in a second mode, refrain from changing the pseudo engine sound in accordance with the driving history.

6. The sound management system according to claim 5, wherein
the speaker includes an interior speaker and an exterior speaker,
the one or more processors are further configured to:
output, through the interior speaker, the pseudo engine sound generated in the first mode; and
output, through the exterior speaker, the pseudo engine sound generated in the second mode.

7. The sound management system according to claim 1, further comprising one or more storage devices configured to store basic sound source data for generating the pseudo engine sound, wherein
the one or more processors are further configured to update the basic sound source data used to generate the pseudo engine sound in accordance with the driving history.

8. The sound management system according to claim 7, wherein
the one or more storage devices store both initial basic sound source data and latest basic sound source data.

9. The sound management system according to claim 7, wherein
the one or more storage devices store only latest basic sound source data.

10. The sound management system according to claim 7, wherein
the one or more storage devices store a plurality of types of basic sound source data at a plurality of timings, and
the one or more processors are configured to select one of the plurality of types of basic sound source data that is specified by a user, and to generate the pseudo engine sound based on the selected basic sound source data.

11. The sound management system according to claim 7, wherein
the one or more processors are further configured to provide another electric vehicle with the basic sound source data updated in accordance with the driving history of the electric vehicle.

12. The sound management system according to any one of claims 1 to 11, wherein
the electric vehicle is provided with an accelerator pedal and a sequential shifter, and
in a manual mode, the electric vehicle is configured to change an output characteristic of the electric motor for an operation of the accelerator pedal in accordance with a gearshift operation of the sequential shifter.

13. The sound management system according to any one of claims 1 to 11, wherein
the electric vehicle is provided with an accelerator pedal, a pseudo clutch pedal, and a pseudo shift device,
the pseudo clutch pedal is operated when the pseudo shift device is operated, and
in a manual mode, the electric vehicle is configured to change an output of the electric motor for an operation of the accelerator pedal in accordance with an operation of the pseudo clutch pedal and an operation of the pseudo shift device.

14. An electric vehicle that uses an electric motor as a power unit for running,
the electric vehicle comprising one or more processors configured to generate a pseudo engine sound and to output the pseudo engine sound through a speaker mounted on the electric vehicle, wherein
the one or more processors are configured to acquire driving history information indicating a driving history of the electric vehicle and to change the pseudo engine sound in accordance with the driving history.

15. A sound management program applied to an electric vehicle that uses an electric motor as a power unit for running,
the sound management program being configured to perform an engine sound output process when executed by a computer, wherein
the engine sound output process includes:
generating a pseudo engine sound and outputting the pseudo engine sound through a speaker mounted on the electric vehicle; and
acquiring driving history information indicating a driving history of the electric vehicle and changing the pseudo engine sound in accordance with the driving history.
